# EUROPEAN PATENT APPLICATION

(11) **EP 4 376 188 A1**
(43) Date of publication of application: **29.05.2024**
(21) Application number: 22918473.4
(22) Date of filing: 28.12.2022
(51) Int. Cl.: H01M 50/24, H01M 50/244, H01M 50/249, H01M 50/236, H01M 50/242

(54) **BATTERY AND ELECTRIC DEVICE**

(30) Priority: 07.01.2022 CN 202210012038
(71) Applicant: Jiangsu Contemporary Amperex Technology Limited, Liyang, Jiangsu 213300 (CN)
(72) Inventor: WANG, Zhi, hangzhou, Jiangsu 213300 (CN)
(74) Representative: Rowlands, Stuart Michael
(86) International application number: PCT/CN2022/143013
(87) International publication number: WO 2023/131032

(57) **Abstract**

A battery and an electric device. The battery (100) comprises: a plurality of battery cells (10); and a box (1) for accommodating the plurality of battery cells (10). The box (1) comprises two first plates (11) arranged opposite each other in a first direction, the first direction being parallel to an extension direction of the battery cells (10), wherein the plurality of battery cells (10) are arranged between the two first plates (11); the side of each first plate (11) facing the battery cells (10) is provided with an accommodating portion (12); and ends of at least some of the battery cells (10) extend into the accommodating portion (12) and are connected to each first plate (11). By providing each side frame with an accommodating portion (12) adapted to the battery cells (10), the mechanical strength of the box (1) itself can be fully utilized, the battery cells (10) can be fitted into the box (1), and the capacity of the battery cells (10) to transfer an external force to the first plates (11) when the battery (100) is subjected to the force is enhanced, thereby improving the overall rigidity of the battery (100).

## Description

### CROSS-REFERENCE TO RELATED APPLICATIONS

This application claims priority to Chinese Patent Application No. 202210012038.5, filed on January 07, 2022 and entitled "BATTERY AND ELECTRIC APPARATUS", which is incorporated herein by reference in its entirety.

### TECHNICAL FIELD

This application pertains to the field of battery technologies, and in particular, relates to a battery and an electric apparatus.

### BACKGROUND

With the development of both society and science and technology, batteries have been widely used for powering high-power apparatuses, such as electric vehicles, due to their advantages such as high energy density, high power density, long cycle life, and long storage time.

In the development of battery technology, safety is another non-negligible issue in addition to performance improvement. If the safety of a battery cannot be guaranteed, the battery cannot be used. Therefore, how safety performance of batteries is improved is an urgent technical problem that needs to be solved in battery technology.

### SUMMARY

Embodiments of this application provide a battery and an electric apparatus, so as to optimize internal architecture of the battery and enhance its overall mechanical strength, thereby improving safety performance of the battery and prolonging service life of the battery.

According to a first aspect of the embodiments of this application, a battery is provided, including a box and a plurality of battery cells. The box is configured to accommodate the plurality of battery cells; where the box includes two first plates opposite each other in a first direction, and the first direction is parallel to an extension direction of the battery cells; where the plurality of battery cells are disposed between the two first plates, at least one side of the first plate facing the battery cells is provided with an accommodating portion, and at least part of an end portion of the battery cell extends into the accommodating portion and is connected to the first plate.

With the foregoing structure used, by providing the accommodating portions that fit with the battery cells on the side frames, the mechanical strength of the box itself can be fully used to enable the battery cells to be attached to the box, which can enhance the capability of the battery cells to transfer force to the first plates when the battery is subjected to external force, improving overall stiffness of the battery.

In some embodiments, the two first plates each include the accommodating portion, and at least part of two ends of the battery cell in the first direction are accommodated in the accommodating portions of the two first plates respectively.

With the foregoing structure used, providing the accommodating portions on the first plates on the two ends of the battery cells in the first direction enables the force on the battery cells to be uniformly transferred to the first plates on the two ends, further improving the overall stiffness of the battery.

In some embodiments, the accommodating portion includes a plurality of accommodating recesses, and the plurality of accommodating recesses are disposed corresponding to the plurality of battery cells.

With the foregoing structure used, the provision of the plurality of accommodating recesses can make the accommodating portions fully fit with the plurality of battery cells respectively, not only enhancing connection stability between the accommodating portions and the battery cells but also facilitating dispersion of the force on the battery cells to the first plates.

In some embodiments, the battery cell is provided in at least two in the first direction, and an end, close to the first plate, of the battery cell adjacent to the first plate extends into and is connected to the accommodating portion.

With the foregoing structure used, the support manner of the first plate provided can adapt to various sizes of the battery cells, and make it possible to increase the number of battery cells in the battery, ensuring that various battery cells can be used.

In some embodiments, the battery cell is provided in at least two layers in a second direction orthogonal to the first direction.

The foregoing structure used can continue to accumulate the battery cells in a thickness direction of the box, helping to increase the number of battery cells.

In some embodiments, the battery cell is a cylindrical battery cell.

In some embodiments, the accommodating recess fits with the cylindrical battery cell, and a cross section of the accommodating recess is arc-shaped.

With the foregoing structure used, the shape of the accommodating recess fitting with the shape of the battery cell facilitates the connection between the battery cell and the accommodating recess, and can significantly enhance the connection stability between the battery cell and the accommodating recess, enhancing the capability of force transfer between the battery cell and the accommodating recess.

In some embodiments, the battery further includes a heat exchange member, where the plurality of battery cells are mounted on a surface of the heat exchange member, and the heat exchange member is configured to regulate temperature of the battery cells.

With the foregoing structure used, the battery cells are connected to the heat exchange member, such that the plurality of battery cells form a relatively unified entity, which can not only allow the plurality of battery cells to mutually support each other, improving the overall stiffness, but also reduce the problem of low battery stiffness caused by many suspended portions in the battery cells.

In some embodiments, the battery further includes a reinforcing member, where at least part of the reinforcing member is disposed between adjacent battery cells and attached to the battery cells.

With the foregoing structure used, the provision of the reinforcing member can further reduce the suspended portions in the battery cells and improve compactness between the battery cells, improving the stiffness of the battery cells.

In some embodiments, the reinforcing member extends along the first direction, and two ends of the reinforcing member are connected to the two first plates respectively.

With the foregoing structure used, the reinforcing member extending along the first direction and being connected to the first plates can allow the battery cells, the reinforcing member, and the first plates to be mutually supported, which significantly enhances the mechanical strength inside the battery.

In some embodiments, the first plate is provided with a slot, and the reinforcing member extends into the slot and is snap-fitted with the first plate.

With the foregoing structure used, the provision of the slot can further use the support capability of the first plate, facilitating the stable connection between the reinforcing member and the battery cells.

In some embodiments, the reinforcing member is provided with connecting surfaces that fit with adjacent battery cells, and the reinforcing member is attached to the adjacent battery cells through the connecting surfaces.

With the foregoing structure used, the provision of the connecting surface can avoid direct rigid collision between the reinforcing member and the battery cells, and reduce damage to the battery cells when the battery module is subjected to external force.

In some embodiments, the first plate is further provided with a cavity communicating with the accommodating portion and a frame transfer member disposed in the cavity, an electrode structure of the battery cell extends into the cavity and is connected to the frame transfer member, and the frame transfer member is configured to collect current of the battery cells disposed in the first plate.

The foregoing structure used facilitates the provision of the frame transfer member in the cavity in advance, such that the connection between the electrodes and the frame transfer member can be achieved when the battery cells are fixed in the accommodating portion, which can significantly improve production efficiency of the battery. In addition, the provision of the frame transfer member can collect current of all the battery cells in the first plate, which facilitates overall charging and discharging of the battery.

In some embodiments, the box further includes a cover plate, the cover plate covers a surface of the first plate, the first plate is further provided with a sinking platform, and the sinking platform is configured to accommodate the cover plate.

The foregoing structure used improves the structure of the battery, and allows the cover plates on two end faces of the frame after connected to be not higher than an end face of the first plate, which reduces the protruding structures at the upper and lower end faces of the battery and ensures flatness of the battery, facilitating stacking, piling, and attachment of a plurality of batteries.

According to a second aspect of the embodiments of this application, an electric apparatus is provided, including the foregoing battery, where the battery is configured to supply electric energy.

As compared with the prior art, in the battery according to the embodiments of this application, by providing the accommodating portions that fit with the battery cells on the side frames, the mechanical strength of the box itself can be fully used to enable the battery cells to be attached to the box, which enhances the capability of the battery cells to transfer force to the first plates when the battery is subjected to external force, improving overall stiffness of the battery.

### BRIEF DESCRIPTION OF DRAWINGS

The following describes features, advantages, and technical effects of the example embodiments of this application with reference to the accompanying drawings.
FIG. 1 is a schematic structural diagram of a vehicle 1000 according to some embodiments of this application.
FIG. 2 is a schematic structural diagram of an embodiment of a battery of this application.
FIG. 3 is a schematic diagram of an internal structure of the embodiment shown in FIG. 2.
FIG. 4 is a schematic structural diagram of a first plate according to the embodiment shown in FIG. 2.
FIG. 5 is a partially enlarged view at A in FIG. 3.
FIG. 6 is a schematic structural diagram of an accommodating portion according to the embodiment shown in FIG. 2.
FIG. 7 is another schematic structural diagram of the accommodating portion according to the embodiment shown in FIG. 2.

In the accompanying drawings:
1. box; 11. first plate; 12. accommodating portion; 121. accommodating recess; 122. main chamber; 13. slot; 14. cavity; 15. frame transfer member; 16. cover plate; 17. sinking platform; 18. second plate; 2. heat exchange member; 3. reinforcing member; 31. connecting surface; 10. battery cell; 100. battery; 200. controller; 300. motor; and 1000. vehicle.

In the accompanying drawings, the figures are not necessarily drawn to scale.

### DESCRIPTION OF EMBODIMENTS

The following further describes the implementations of this application in detail with reference to the accompanying drawings and embodiments. The following detailed description of the embodiments and the accompanying drawings are intended to illustrate the principle of this application, rather than to limit the scope of this application, meaning this application is not limited to the embodiments described herein.

In the descriptions of this application, it should be noted that unless otherwise stated, "a plurality of" means more than two; and the orientations or positional relationships indicated by the terms "upper", "lower", "left", "right", "inside", "outside", and the like are merely for ease and brevity of description of this application rather than indicating or implying that the apparatuses or elements mentioned must have specific orientations or be constructed and manipulated according to specific orientations, and therefore shall not be construed as any limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments. It is explicitly or implicitly understood by persons skilled in the art that the embodiments described in this application may be combined with other embodiments.

The orientation terms appearing in the following description all refer to directions shown in the figures, and do not limit the specific structure of this application. In the descriptions of this application, it should also be noted that unless otherwise specified and defined explicitly, the terms "mount", "connect", and "join" should be understood in their general senses. For example, they may refer to a fixed connection, a detachable connection, or an integral connection; and a direct connection or an indirect connection via an intermediate medium. Persons of ordinary skill in the art can understand specific meanings of these terms in this application as appropriate to specific situations.

At present, from the perspective of market development, batteries have been widely used in a variety of fields due to their advantages such as high energy density, high power density, long cycle life, and long storage time. For example, the batteries have been used in energy storage power supply systems such as hydroelectric power plants, thermal power plants, wind power plants, and solar power plants, and also used for powering high-power apparatuses, for example, many fields including electric transportation tools such as electric bicycles, electric motorcycles, and electric vehicles, military equipment, and aerospace. With continuous expansion of application fields of batteries, market demands for the batteries are also expanding. A battery typically includes one or more battery cells. The single battery cells are both independent of each other and interconnected. Any issues that arise can directly affect overall service life of the battery. However, the battery structure in the prior art is simple. Typically, arranged battery cells are placed on a heat exchange plate in groups, and then a plastic support plate is added to the bottom of the battery cells which are grouped on side beams of a profiled box.

The inventor of this application has noted that the existing battery structure has many internal suspended portions, which present large defects in actual use, and in turn lead to damage to the battery cells or even electrolyte leakage, thereby affecting the life of the battery. In actual use, the battery is often used in a vehicle environment or a centralized energy storage environment. During the operation in these environments or during battery disassembly and transportation, the battery cells are susceptible to external extrusion force or impact force acting on the battery. This easily results in damage to the battery cells or even electrolyte leakage in the battery, thereby affecting the life of the battery.

To alleviate the architectural defects in the existing battery, the applicant has found through research that the structure between the battery cells and the frame in the battery can be adjusted, and specifically, mechanical strength of the frame is fully used to provide stress to the battery cells suspended inside the frame and to facilitate quick transfer of the force acting on the battery to the frame, which can significantly improve stiffness of the battery and reduce damage to the battery cells or even electrolyte leakage in the battery.

Based on the above considerations, to solve the problem of low stiffness of the existing battery architecture, the inventor of this application, through in-depth research, has designed a battery and an electric apparatus.

In this application, a battery cell may include a secondary battery cell or a primary battery cell, or may be a lithium-ion battery cell, a sodium-ion battery cell, a magnesium-ion battery cell, or the like. This is not limited in the embodiments of this application. The battery cell may be cylindrical, flat, cuboid, or of other shapes.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell disclosed in the embodiments of this application may be used without limitation in electric apparatuses such as vehicles, ships, or aircrafts. The battery cell, battery, and the like disclosed in this application may be used to constitute a power supply system of that electric apparatus.

An embodiment of this application provides an electric apparatus that uses a battery as a power source. The electric apparatus may be but is not limited to a mobile phone, a tablet, a notebook computer, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle 1000 is used as an example for description of the following embodiments.

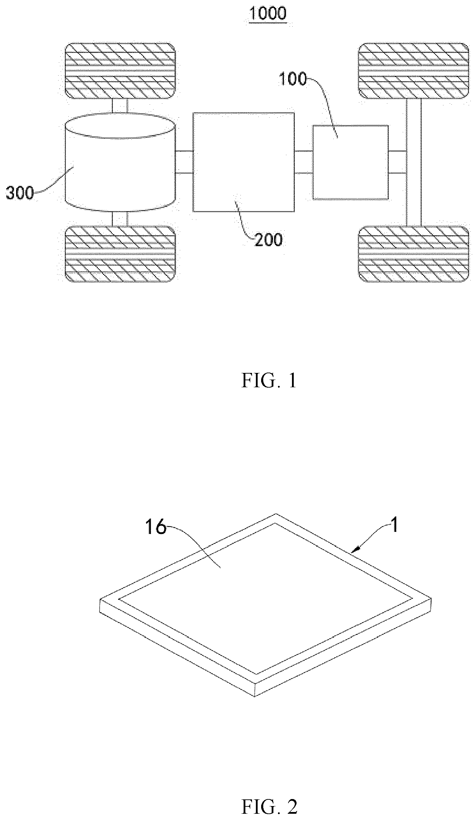

Referring to FIG. 1, FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

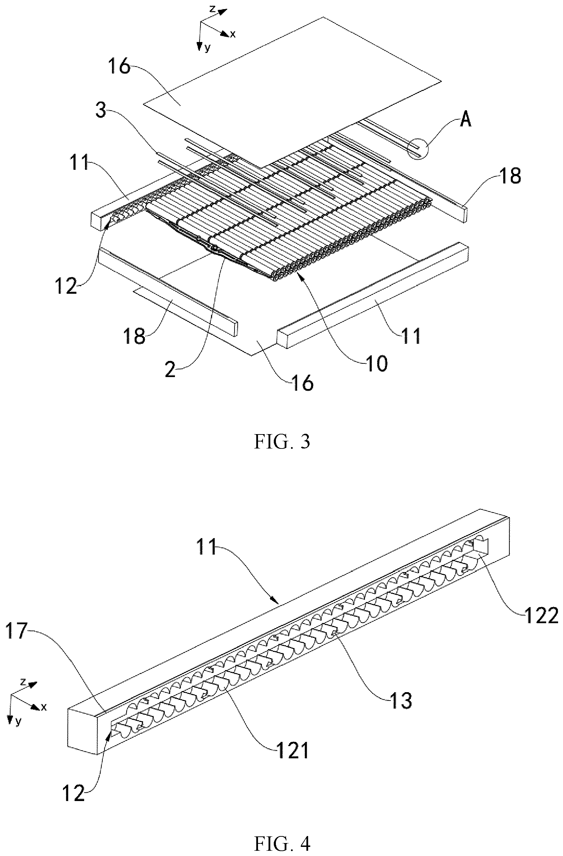

Referring to FIG. 3 and FIG. 4, in the embodiments of this application, the first direction is an x-axis direction, the second direction is a y-axis direction, and the third direction is a z-axis direction.

In some embodiments of this application, optionally, as shown in FIG. 2 and FIG. 3, FIG. 2 is a schematic structural diagram of an embodiment of this application, and FIG. 3 is a schematic diagram of an internal structure of the embodiment shown in FIG. 2. A battery is provided, including a plurality of battery cells 10 and a box 1. The box 1 is configured to accommodate the plurality of battery cells 10. The box 1 includes two first plates 11 opposite each other in a first direction, and the first direction is parallel to an extension direction of the battery cells 10. The plurality of battery cells 10 are disposed between the two first plates 11, at least one side of the first plate 11 facing the battery cells 10 is provided with an accommodating portion 12, and at least part of an end portion of the battery cell 10 extends into the accommodating portion 12 and is connected to the first plate 11.

Referring to FIG. 2 and FIG. 3, the box 1 is enclosed by a plurality of plates, and the plurality of battery cells 10 are disposed in the plurality of plates. Without limitation, the box 1 is a square shape enclosed by four plates, and the plates may be divided into the first plate 11 and a second plate 18. The first plate 11 is disposed on an end of the box 1 in the first direction and connected to at least part of the battery cell 10, and the second plate 18 may be a normal plate for connecting to form a frame. Without limitation, the accommodating portion 12 may be provided with a cavity 14 structure located on a side wall of the first plate 11 in an extension direction of the first plate 11 and extending toward the inside of the first plate 11, and the battery cell 10 connected to the first plate 11 has an end portion extending into the first plate 11. Without limitation, the accommodating portions 12 may be connected to the battery cells 10 by any one or more of gluing, welding, snap-fitting, or the like.

By providing the accommodating portions 12 that fit with the battery cells 10 on the side frames, the mechanical strength of the box 1 itself can be fully used to enable the battery cells 10 to be attached to the box 1, which enhances the capability of the battery cells 10 to transfer force to the first plates 11 when the battery is subjected to external force, improving overall stiffness of the battery.

In some embodiments of this application, optionally, as shown in FIG. 3, FIG. 3 is a schematic diagram of an internal structure of the embodiment shown in FIG. 2. The two first plates 11 each include the accommodating portion 12, and at least part of two ends of the battery cell 10 in the first direction are accommodated in the accommodating portions 12 of the two first plates 11 respectively.

Referring to FIG. 3, the box 1 is a square shape enclosed by four plates, and the first plates 11 are plates on two sides in the first direction. Without limitation, the accommodating portions 12 of the first plates 11 on the two sides are disposed corresponding to each other. To be specific, for the battery cells 10 extending along a same straight line in the first direction, one side extends into the accommodating portion 12 of the first plate 11 on one side of the box 1, and the other side extends into the accommodating portion 12 of the first plate 11 on the other side of the box 1.

Providing the accommodating portions 12 on the first plates 11 on the two ends of the battery cells 10 in the first direction enables the force on the battery cells 10 to be uniformly transferred to the first plates 11 on the two ends, further improving the overall stiffness of the battery.

In some embodiments of this application, optionally, as shown in FIG. 3 and FIG. 4, FIG. 3 is a schematic diagram of an internal structure of the embodiment shown in FIG. 2, and FIG. 4 is a schematic structural diagram of the first plate 11 according to the embodiment shown in FIG. 2. The accommodating portion 12 includes a plurality of accommodating recesses 121, and the plurality of accommodating recesses 121 are disposed corresponding to the plurality of battery cells 10.

Referring to FIG. 4, the accommodating portion 12 further includes a main chamber 122. The main chamber 122 is a cavity 14 structure having an opening provided on a side wall of the first plate 11 in an extension direction of the first plate 11 and extending toward the inside of the first plate 11, and the plurality of accommodating recesses 121 are accommodating recesses 121 having an opening provided on an inner wall of the main chamber 122, extending along a thickness direction of the first plate 11, and running through the side wall of the first plate 11 close to the battery cells 10. Without limitation, a cross section of the accommodating recess 121 may be arc-shaped, rectangular, or the like. Specifically, the shape of the cross section of the accommodating recess 121 fits with the portion of the battery cell connected into the accommodating recess 121. Specifically, when the first plate 11 is provided in two in the first direction, the accommodating recesses 121 of the first plates 11 on the two sides are disposed corresponding to each other. To be specific, for the battery cells 10 extending along a same straight line in the first direction, one side extends into the accommodating recess 121 of the first plate 11 on one side of the box 1, and the other side extends into the accommodating recess 121 of the first plate 11 on the other side of the box 1.

The provision of the plurality of accommodating recesses 121 can make the accommodating portions 12 fully fit with the plurality of battery cells 10 respectively, not only enhancing connection stability between the accommodating portions 12 and the battery cells 10 but also facilitating dispersion of the force on the battery cells to the first plates 11.

In some embodiments of this application, optionally, as shown in FIG. 3, FIG. 3 is a schematic diagram of an internal structure of the embodiment shown in FIG. 2. The battery cell 10 is provided in at least two in the first direction, and an end, close to the first plate 11, of the battery cell 10 adjacent to the first plate 11 extends into and is connected to the accommodating portion 12.

Referring to FIG. 3, the battery cell is provided in four in the first direction, and the four battery cells 10 are sequentially connected end to end.

The support manner of the first plate 11 provided can adapt to various sizes of the battery cells 10, and make it possible to increase the number of battery cells in the battery, ensuring that various battery cells 10 can be used.

In some embodiments of this application, optionally, as shown in FIG. 3 and FIG. 4, FIG. 3 is a schematic diagram of an internal structure of the embodiment shown in FIG. 2, and FIG. 4 is a schematic structural diagram of the first plate according to the embodiment shown in FIG. 2. The battery cell 10 is provided in at least two layers in a second direction orthogonal to the first direction.

Referring to FIG. 3 and FIG. 4, the battery cell 10 is provided in two layers in the second direction. Without limitation, the second direction is a thickness direction of the box 1 and the plate. Without limitation, when the battery cell 10 is provided in two layers, upper and lower side walls of the foregoing main chamber 122 each are provided with the accommodating recesses 121 extending along the thickness direction of the first plate 11 and running through the side wall of the first plate 11 close to the battery cells 10, where the lower layer of battery cells 10 is connected to the accommodating recesses 121 on the lower side wall of the main chamber 122, and the upper layer of battery cells 10 is connected to the accommodating recesses 121 on the upper side wall of the main chamber 122.

The provision of the multiple layers of battery cells 10 in the second direction can continue to accumulate the battery cells 10 in the thickness direction of the box 1, helping to increase the number of battery cells.

In some embodiments of this application, optionally, as shown in FIG. 3, FIG. 3 is a schematic diagram of an internal structure of the embodiment shown in FIG. 2. The battery cell 10 is a cylindrical battery cell.

Referring to FIG. 3, specifically, in a third direction orthogonal to both the first direction and the second direction, the battery cell is provided in multiple rows. Specifically, with the cylindrical battery cell used, the multiple layers of battery cells 10 in the second direction are staggered, that is, the upper layer of battery cells 10 is disposed at connection gaps between the lower layer of battery cells 10.

With the cylindrical battery cell used, there are many suspended structures inside the box 1, which can give full play to the structural advantages of the first frame.

In some embodiments of this application, optionally, as shown in FIG. 4, FIG. 4 is a schematic structural diagram of the first plate 11 according to the embodiment shown in FIG. 2. The accommodating recess 121 fits with the cylindrical battery cell, that is, a cross section of the accommodating recess 121 is arc-shaped.

The shape of the accommodating recess 121 fitting with the shape of the battery cell 10 facilitates the connection between the battery cell 10 and the accommodating recess 121, and can significantly enhance the connection stability between the battery cell 10 and the accommodating recess 121, enhancing the capability of force transfer between the battery cell 10 and the accommodating recess 121.

In some embodiments of this application, optionally, as shown in FIG. 3, FIG. 3 is a schematic diagram of an internal structure of the embodiment shown in FIG. 2. The battery further includes a heat exchange member 2, where the plurality of battery cells 10 are mounted on a surface of the heat exchange member 2, and the heat exchange member 2 is configured to regulate temperature of the battery cells 10.

The heat exchange member 2 may be a cooling water plate. Without limitation, the heat exchange member 2 may be connected to the battery cells 10 by any one or more of gluing, welding, snap-fitting, or the like. Without limitation, the heat exchange member 2 may be a flexible material. Specifically, the flexible material may be a thermally conductive insulating elastic rubber, such as one or two of Sil-Pad 400 and Sil-Pad 900S.

The battery cells 10 are connected to the heat exchange member 2, such that the plurality of battery cells 10 form a relatively unified entity, which can not only allow the plurality of battery cells 10 to mutually support each other, improving the overall stiffness, but also reduce the problem of low battery stiffness caused by many suspended portions in the battery cells 10. The flexible material being used can also allow for better fitting between the battery cells 10 and the heat exchange member 2.

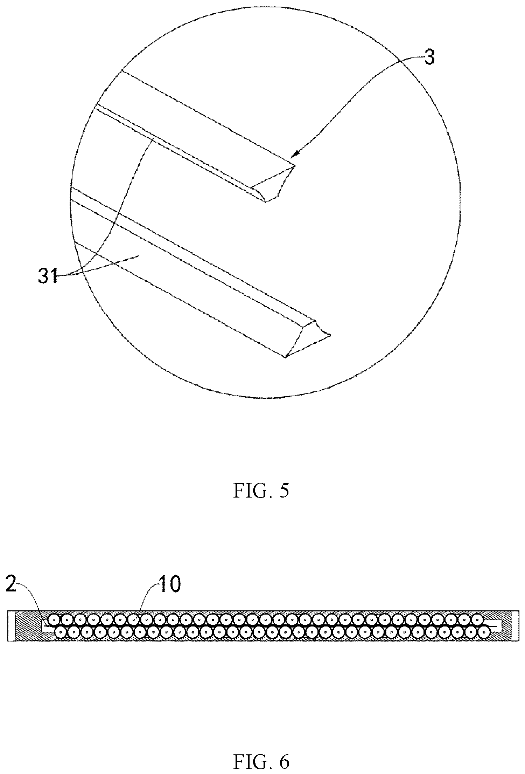

In some embodiments of this application, optionally, as shown in FIG. 3 to FIG. 5, FIG. 3 is a schematic diagram of an internal structure of the embodiment shown in FIG. 2, FIG. 4 is a schematic structural diagram of the first plate 11 according to the embodiment shown in FIG. 2, and FIG. 5 is a partially enlarged view at A in FIG. 3. The battery further includes a reinforcing member 3, where at least part of the reinforcing member 3 is disposed between adjacent battery cells 10 and attached to the battery cells 10.

At least part of the reinforcing member 3 is disposed between every two adjacent battery cells 10.

The provision of the reinforcing member 3 can further reduce the suspended portions in the battery cells 10 and improve compactness between the battery cells 10, improving the stiffness of the battery cells 10.

In some embodiments of this application, optionally, as shown in FIG. 3, FIG. 3 is a schematic diagram of an internal structure of the embodiment shown in FIG. 2. The reinforcing member 3 extends along the first direction, and two ends of the reinforcing member 3 are connected to the two first plates 11 respectively.

The reinforcing member 3 extending along the first direction and being connected to the first plates 11 can allow the battery cells 10, the reinforcing member 3, and the first plates 11 to be mutually supported, which significantly enhances the mechanical strength inside the battery.

In some embodiments of this application, optionally, as shown in FIG. 4 and FIG. 5, FIG. 4 is a schematic structural diagram of the first plate 11 according to the embodiment shown in FIG. 2, and FIG. 5 is a partially enlarged view at A in FIG. 3. The first plate 11 is provided with a slot 13, and the reinforcing member 3 extends into the slot 13 and is snap-fitted with the first plate 11.

Referring to FIG. 4, the slot 13 may partially communicate with the accommodating recess 121. Without limitation, a cross section of the slot 13 fits with a cross section of the reinforcing member 3. Without limitation, the reinforcing member 3 may be connected to the slot 13 by any one or more of gluing, welding, snap-fitting, or the like.

The provision of the slot 13 can further use the support capability of the first plate 11, facilitating the stable connection between the reinforcing member 3 and the battery cells 10.

In some embodiments of this application, optionally, as shown in FIG. 3 to FIG. 5, FIG. 3 is a schematic diagram of an internal structure of the embodiment shown in FIG. 2, FIG. 4 is a schematic structural diagram of the first plate 11 according to the embodiment shown in FIG. 2, and FIG. 5 is a partially enlarged view at A in FIG. 3. The reinforcing member 3 is provided with connecting surfaces 31 that fit with adjacent battery cells 10, and the reinforcing member 3 is attached to the adjacent battery cells 10 through the connecting surfaces 31.

Without limitation, the reinforcing member 3 may be connected to the battery cells 10 by any one or more of gluing, welding, or the like.

The provision of the connecting surface 31 can avoid direct rigid collision between the reinforcing member 3 and the battery cells 10, and reduce damage to the battery cells 10 when the battery module is subjected to external force.

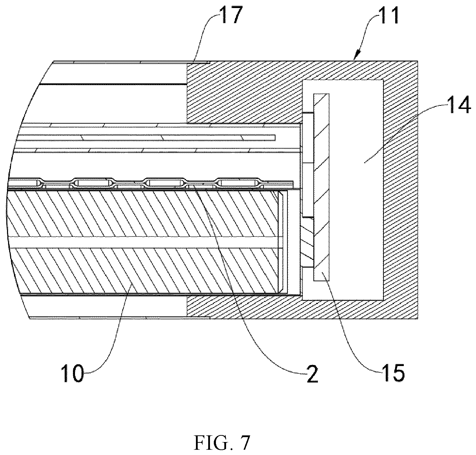

In some embodiments of this application, optionally, as shown in FIG. 4, FIG. 6, and FIG. 7, FIG. 4 is a schematic structural diagram of the first plate 11 according to the embodiment shown in FIG. 2, FIG. 6 is a schematic structural diagram of the accommodating portion 12 according to the embodiment shown in FIG. 2, and FIG. 7 is another schematic structural diagram of the accommodating portion 12 according to the embodiment shown in FIG. 2. The first plate 11 is further provided with a cavity 14 communicating with the accommodating portion 12 and a frame transfer member 15 disposed in the cavity 14, an electrode structure of the battery cell 10 extends into the cavity 14 and is connected to the frame transfer member 15, and the frame transfer member 15 is configured to collect current of the battery cells 10 disposed in the first plate 11.

The provision of the cavity 14 facilitates the provision of the frame transfer member 15 in advance, such that the connection between the electrodes and the frame transfer member 15 can be achieved when the battery cells 10 are fixed in the accommodating portion 12, which can significantly improve production efficiency of the battery. In addition, the provision of the frame transfer member 15 can collect current of all the battery cells 10 in the first plate 11, which facilitates overall charging and discharging of the battery.

In some embodiments of this application, optionally, as shown in FIG. 3 and FIG. 7, FIG. 3 is a schematic diagram of an internal structure of the embodiment shown in FIG. 2, and FIG. 7 is another schematic structural diagram of the accommodating portion 12 according to the embodiment shown in FIG. 2. The box 1 further includes a cover plate 16, the cover plate 16 covers a surface of the first plate 11, the first plate 11 is further provided with a sinking platform 17, and the sinking platform 17 is configured to accommodate the cover plate 16.

Referring to FIG. 3, upper and lower sides of the first plate 11 are both connected with the cover plate 16. Specifically, the upper and lower sides of the first plate 11 are both provided with the sinking platform 17.

The provision of the cover plate 16 improves the structure of the battery, and allows the cover plates 16 on two end faces of the frame after connected to be not higher than an end face of the first plate 11, which reduces the protruding structures at the upper and lower end faces of the battery and ensures flatness of the battery, facilitating stacking, piling, and attachment of a plurality of batteries.

As compared with the prior art, in the battery according to the embodiments of this application, by providing the accommodating portions 12 that fit with the battery cells 10 on the side frames, the mechanical strength of the box 1 itself can be fully used to enable the battery cells 10 to be attached to the box 1, which enhances the capability of the battery cells 10 to transfer force to the first plates 11 when the battery is subjected to external force, improving overall stiffness of the battery.

Although this application has been described with reference to the preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery, comprising:
a plurality of battery cells (10); and
a box (1) configured to accommodate the plurality of battery cells (10); wherein the box (1) comprises two first plates (11) opposite each other in a first direction, and the first direction is parallel to an extension direction of the battery cells (10);
wherein the plurality of battery cells (10) are disposed between the two first plates (11), at least one side of the first plate (11) facing the battery cells (10) is provided with an accommodating portion (12), and at least part of an end portion of the battery cell (10) extends into the accommodating portion (12) and is connected to the first plate (11).

2. The battery according to claim 1, wherein the two first plates (11) each comprise the accommodating portion (12), and at least part of two ends of the battery cell (10) in the first direction are accommodated in the accommodating portions (12) of the two first plates (11) respectively.

3. The battery according to claim 1 or 2, wherein the accommodating portion (12) comprises a plurality of accommodating recesses (121), and the plurality of accommodating recesses (121) are disposed corresponding to the plurality of battery cells (10).

4. The battery according to claim 3, wherein the battery cell (10) is a cylindrical battery cell.

5. The battery according to claim 4, wherein the accommodating recess (121) fits with the cylindrical battery cell, and a cross section of the accommodating recess (121) is arc-shaped.

6. The battery according to any one of claims 1 to 5, wherein the battery cell (10) is provided in at least two in the first direction, and an end, close to the first plate (11), of the battery cell (10) adjacent to the first plate (11) extends into and is connected to the accommodating portion (12).

7. The battery according to any one of claims 1 to 6, wherein the battery cell (10) is provided in at least two layers in a second direction orthogonal to the first direction.

8. The battery according to any one of claims 1 to 7, further comprising a heat exchange member (2), wherein the plurality of battery cells (10) are mounted on a surface of the heat exchange member (2), and the heat exchange member (2) is configured to regulate temperature of the battery cells (10).

9. The battery according to any one of claims 1 to 8, further comprising a reinforcing member (3), wherein at least part of the reinforcing member (3) is disposed between adjacent battery cells (10) and attached to the battery cells (10).

10. The battery according to claim 9, wherein the reinforcing member (3) extends along the first direction, and two ends of the reinforcing member (3) are connected to the two first plates (11) respectively.

11. The battery according to claim 10, wherein the first plate (11) is provided with a slot (13), and the reinforcing member (3) extends into the slot (13) and is snap-fitted with the first plate (11).

12. The battery according to any one of claims 1 to 11, wherein the first plate (11) is further provided with a cavity (14) communicating with the accommodating portion (12) and a frame transfer member (15) disposed in the cavity (14), an electrode structure of the battery cell (10) extends into the cavity (14) and is connected to the frame transfer member (15), and the frame transfer member (15) is configured to collect current of the battery cells (10) disposed in the first plate (11).

13. The battery according to any one of claims 1 to 12, wherein the box (1) further comprises a cover plate (16), the cover plate (16) covers a surface of the first plate (11), the first plate (11) is further provided with a sinking platform (17), and the sinking platform (17) is configured to accommodate the cover plate (16).

14. An electric apparatus, comprising the battery according to any one of claims 1 to 13, wherein the battery is configured to supply electric energy.
